# EUROPÄISCHE PATENTANMELDUNG

(11) **EP 3 712 416 A1**
(43) Veröffentlichungstag der Anmeldung: **23.09.2020**
(21) Anmeldenummer: 19164644.7
(22) Anmeldetag: 22.03.2019
(51) Int. Cl.: F02D 19/06, F02D 41/00, B63H 21/38, F02M 21/02, C01B 3/00

(54) **VERFAHREN ZUR VERSORGUNG EINES WASSERFAHRZEUGES MIT UMWELTFREUNDLICHER ENERGIE**

(71) Anmelder: Marine Service GmbH, 20457 Hamburg (DE)
(72) Erfinder: Schmidt-Lüssmann, Jochen, 21244 Buchholz (DE)
(74) Vertreter: Meyer, Ludgerus

(57) **Zusammenfassung**

Die Erfindung betrifft ein Verfahren zur Versorgung eines Wasserfahrzeuges mit elektrischer Energie zum Betrieb von fahrzeugeigenen Versorgungseinrichtungen und/oder des Fahrzeugantriebs, bei dem in einem Kreislauf LOHC-Trägermittel unter Wärmezufuhr mittels eines ersten Katalysators mit Wasserstoff beladen und das mit Wasserstoff beladene LOHC in einem ersten Speicher (6) zwischengespeichert wird, dann der Wasserstoff mittels eines zweiten Katalysators entladen und das entladene LOHC in einem zweiten Speicher (5) zwischengespeichert wird, bevor es erneut mit Wasserstoff beladen wird, wobei der aus dem LOHC entladene Wasserstoff einer Energieerzeugungseinheit zur Erzeugung elektrischer oder motorischer Energie zugeführt wird. Erfindungsgemäß wird der dem LOHC Kreislauf zugeführte Wasserstoff mittels eines Dampfreformers (3) aus auf dem Wasserfahrzeug gelagertem LNG-Flüssiggas erzeugt.

## Beschreibung

Die vorliegende Erfindung betrifft ein Verfahren zur Versorgung eines Wasserfahrzeuges, insbesondere eines Kreuzfahrtschiffes, mit umweltfreundlicher Energie zum Betrieb von fahrzeugeigenen Versorgungseinrichtungen und/oder des Fahrzeugantriebs.

In den letzten Jahren hat das Bestreben in der Bevölkerung und bei staatlichen Einrichtungen stark zugenommen, die Luftverschmutzung durch Land- und Wasserfahrzeuge aufgrund der Verwendung von Verbrennungsmotoren zu reduzieren und optimal ganz zu vermeiden.

Im Seeverkehr wird als Treibstoff heute noch überwiegend Marinediesel oder sogar Schweröl mit starkem Schwefelgehalt eingesetzt. Letzteres darf in küstennahen Gebieten zwar nicht mehr eingesetzt werden, aber auch Marinediesel trägt weiterhin zur hohen Luftverschmutzung in Häfen und küstennahen Gebieten bei. Dies gilt insbesondere für Kreuzfahrtschiffe, die auch während der Liegezeit in Häfen einen großen Energiebedarf haben, der durchaus größer als 10 MW elektrischer Leistung betragen kann. Einige neuere Kreuzfahrtschiffe sind daher so eingerichtet, dass sie aus Umweltschutzgründen nur noch mit Flüssigerdgas (LNG) betrieben werden.

Es gibt Bestrebungen in einigen Ländern, dass auch LNG-betriebene Schiffe in besonders zu schützenden Gebieten, wie Fjorde des Weltkulturerbes, in Zukunft nicht mehr einfahren dürfen, denn derartige Schiffe benötigen ständig erhebliche Energie nicht nur zum Maschinenantrieb sondern auch für ihren Hotelbetrieb, die auch bei Einsatz von LNG die Luftverschmutzung nicht gänzlich vermeidet. Eine alternative Energieversorgung über aus Batterien zur Verfügung gestellte elektrische Energie kommt für Kreuzfahrtschiffe aufgrund der erforderlichen Energiemenge in der Regel nicht in Betracht.

Bei Landfahrzeugen zeigt sich dagegen eine immer stärker werdende Zunahme des Einsatzes von Elektroantrieben, deren Energiebedarf häufig aus regenerativen Quellen stammt. Die elektrische Energie ist dazu in mitzuführenden Batterien gespeichert, die nach Entladung an so genannten Elektrotankstellen wieder aufgeladen werden können.

Auch die Verwendung von Wasserstoff als Energieträger zählt zu den umweltfreundlichen Verfahren zur Bereitstellung von Antriebsenergie, da Wasserstoff emissionsfrei verbrannt werden kann. Mit Wasserstoff können Fahrzeugmotoren zwar weiterhin als Verbrennungsmotoren betrieben werden. Allerdings sind der Aufwand zur flächendeckenden Versorgung und die Speicherung von Wasserstoff in Fahrzeugen ungleich höher als zur Versorgung von Fahrzeugen mit elektrischer Energie. Auch auf Schiffen ist die Versorgung und Lagerung von Wasserstoff bisher nicht entwickelt.

Da die Energiedichte von Wasserstoff als Energieträger volumenmäßig sehr gering ist, muss Wasserstoff zur Lagerung entweder stark verdichtet (bis etwa 700 bar) oder verflüssigt werden (-253 °C). Der logistische Aufwand zur flächendeckenden Versorgung mit Wasserstoff ist daher beträchtlich. Im Jahre 2017 gab es in Deutschland offenbar nur 7 öffentlich zugängliche Wasserstofftankstellen für Landfahrzeuge.

Um den Aufwand zur Hochdruck- oder Tieftemperaturspeicherung von Wasserstoff zu vermeiden, sind Verfahren zur Einbindung von Wasserstoff an einen Zwischenträger bekannt geworden, bei denen ein in einem Kreislauf geführtes Trägermittel unter Verwendung von Katalysatoren zur abwechselnden Beladung mit Wasserstoff und der Entladung von Wasserstoff verwendet wird.

In der DE 10 2008 034 221 A1 ist eine entsprechende Kraftstoffversorgungseinrichtung zur Nutzung in Landfahrzeugen beschrieben. Dort werden zwei Speichertanks verwendet, von denen der erste Speichertank flüssiges LOHC-Trägermittel (Liquid Organic Hydrogen Carrier) enthält, das mit Wasserstoff beladen wird. Der Wasserstoff wird dem ersten Speicher aus einem Druck- oder Tieftemperaturtank oder einer Wasserstofferzeugungseinheit zugeleitet. Der zweite Speichertank enthält das von Wasserstoff befreite Trägermittel, wobei das Trägermittel in einem Kreislauf geführt wird.

Die DE 10 2013 223 588 A1 beschreibt eine Wasserstofferzeugungseinheit zur Belieferung eines LOHC-Kreislaufs mit Wasserstoff, bei der die Wasserstofferzeugungseinheit als Elektrolyseur ausgeführt ist und der erzeugte Wasserstoff in einem Tank gespeichert wird, aus dem er dem LOHC-Kreislauf zugeführt wird. Die für den Betrieb der Wasserstofferzeugungseinheit erforderliche Energie kann z.B. durch Photovoltaik oder Windkraft erzeugt werden, wie es die DE 10 2012 216 669 A1 vorschlägt. Die damit erzeugte Energiemenge ist zum Betriebe eines großen Schiffes, wie eines Kreuzfahrtschiffes, jedoch nicht ausreichend.

Im industriellen Bereich ist es seit längerer Zeit bekannt, Wasserstoff mittels eines Dampfreformers aus Methan oder Erdgas zu erzeugen.

Der Erfindung liegt daher die Aufgabe zugrunde, ein Verfahren zur zumindest zeitweiligen Versorgung eines Wasserfahrzeugs, insbesondere eines Kreuzfahrtschiffes, mit umweltfreundlicher Energie anzugeben, bei dem zur Energieversorgung Wasserstoff eingesetzt wird, der auf dem Wasserfahrzeug selbst erzeugt werden kann.

Diese Aufgabe wird durch die im Anspruch 1 angegebene Erfindung gelöst. Weitergehende Ausführungsformen der Erfindung sind in Unteransprüchen angegeben.

Die Erfindung ermöglicht es, Wasserstoff als Brennstoff zur Erzeugung elektrischer Energie oder als Treibstoff für Antriebsmaschinen auf einem Schiff zu verwenden, ohne dass größere Speicher zur Lagerung von Wasserstoff und Wieder-Befüllung der Speicher in Häfen für längere Seeaufenthalte erforderlich sind.

Die Erfindung geht aus von einem Verfahren zur Versorgung eines Wasserfahrzeuges mit umweltfreundlicher Energie zum Betrieb von fahrzeugeigenen Versorgungseinrichtungen und/oder des Fahrzeugantriebes, bei dem in einem Kreislauf geführtes LOHC-Trägermittel mit Wasserstoff beladen und daraus wieder abgegeben werden kann. Der abgegebene Wasserstoff kann Energieerzeugungseinheiten zur Bereitstellung von elektrischer Energie oder Antriebsenergie zugeführt werden.

Die Erfindung sieht dazu vor, dass der dem LOHC-Kreislauf zugeführte Wasserstoff mittels eines Dampfreformers aus auf dem Wasserfahrzeug gelagertem LNG-Flüssiggas erzeugt wird.

Vorzugsweise wird nicht das auf dem Schiff für die reguläre Versorgung einer Antriebsmaschine in Lagertanks gespeicherte flüssige LNG-Gas verwendet, sondern das daraus bereits abgegaste Boil-Off-Gas, das gasförmig vorliegt und über einen Kompressor unmittelbar in den Dampfreformer überführt werden kann.

Da der Dampfreformer hohen Wärmebedarf hat, kann ein Teil des Boil-Off-Gases, das einen hohen Methangehalt aufweist, verbrannt werden, um so den Wärmebedarf des Dampfreformers zu decken.

Des Weiteren kann der Wärmedarf des Prozesses zur Erzeugung von Wasserstoff auch durch Abwärme von Antriebsmaschinen, Kühlaggregaten und anderen Ver- und Entsorgungseinrichtungen auf dem Schiff unterstützt werden.

Als Trägermaterial für den LOHC-Kreislauf wird vorzugsweise Dibenzyltoluol verwendet. Alternativ ist auch die Verwendung von Ethylcarbazol oder andere Flüssigkeiten mit äquivalentem Verhalten möglich.

Die bei der Entladung (Dehydrierung) entstehende exotherme Wärme kann auch zur Vorheizung des Trägermaterials und/oder zur Vorheizung des Trägermaterials bei der Aufladung mit Wasserstoff verwendet werden. Auch für den LOHC-Kreislauf kann Abwärme aus Maschinenanlagen eingesetzt werden.

Vorzugsweise erfolgt die Erzeugung und Speicherung von Wasserstoff immer dann, wenn sich das Schiff außerhalb von Gebieten bewegt, die nur emissionsfrei angefahren werden dürfen. Bei Einfahrt in diese Gebiete wird dann auf die Erergieerzeugung aus Wasserstoff umgestellt.

Der Einsatz der Erfindung ermöglicht es daher, ein Schiff zumindest zeitweilig nahezu emissionslos zu betreiben, so dass es aus Umweltgesichtspunkten im Hinblick auf Luftverschmutzung nicht daran gehindert werden kann, in anderenfalls nicht anfahrbare Gebiete oder Häfen einzulaufen.

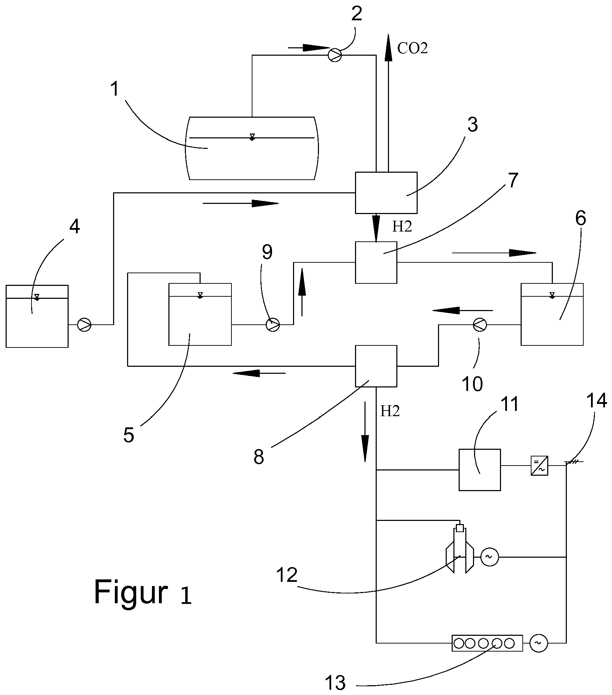

Die Erfindung wird nachstehend anhand eines Ausführungsbeispiels näher erläutert. Die einzige Figur zeigt ein Schema einer erfindungsgemäßen Wasserstofferzeugungs- und Versorgungseinrichtung.

Die Figur zeigt einen LNG-Lagertank 1 auf einem Schiff, in dessen oberem Volumenbereich sich sogenanntes Boil-Off-Gas befindet, das aufgrund von Kälteverlusten aus dem bei etwa - 163°C gelagerten Flüssig-Erdgas bereits ausgesiedet ist. Das Boil-Off-Gas wird über einen Kompressor 2 dem Dampfreformer 3 zugeführt. Da das Gas bereits einen hohen Methangehalt aufweist, eignet es sich sehr gut zur Wasserstofferzeugung.

In dem eingesetzten Dampfreformer wird Methan mit Wasserdampf aus einem Wasservorrat 4 unter hohem Druck und Wärmezufuhr zu Wasserstoff und Kohlenmonoxyd gewandelt und dann über einen Katalysator oxidiert, so dass Wasserstoff und Kohlendioxyd vorliegen, welche anschließend in einem Waschturm voneinander getrennt werden. Das Kohlendioxyd kann als unschädliches Gas an die Atmosphäre abgegeben werden. Die Energie für den Prozess wird aus einer teilweisen Verbrennung von Boil-Off-Gas gewonnen oder aus auf dem Schiff vorhandenen Maschinenanlagen abgeleitet. Bereits auf dem Schiff vorhandener Dampf kann auch zur Vorheizung der in den Dampfreformer eingeleiteten Produkte verwendet werden.

Der so erzeugte Wasserstoff wird nun unter Wärmezufuhr einer Hydriereinrichtung 7 mit einem ersten Katalysator eines LOHC-Kreislaufs zugeführt, der eine Trägerflüssigkeit in Form von Dibenzyltoluol enthält. Die mit Wasserstoff beladene Trägerflüssigkeit wird in einen ersten Speicher 6 überführt und darin zur weiteren Verwendung zwischengelagert.

Aus dem Speicher 6 kann die mit Wasserstoff beladene Trägerflüssigkeit dann mit einer Pumpe 10 einer mit einem zweiten Katalysator versehenen Dehydrier-Einrichtung 8 zugeführt werden, in der die Trägerflüssigkeit unter Abgabe von Wärme von dem Wasserstoff befreit wird. Die entstehende Wärme kann zur Vorheizung der Trägerflüssigkeit verwendet werden. Die LOHC-Trägerflüssigkeit wird dann in einen zweiten Speicher 5 überführt, aus dem sie wiederum über eine Pumpe 9 erneut der Hydriereinrichtung 7 zugeführt werden kann.

Der aus dem LOHC-Kreislauf ausgekoppelte Wasserstoff kann unmittelbar an Verbraucher geleitet werden. Um auch schnelle Lastwechsel bewältigen zu können, ist es sinnvoll, vor den Verbrauchern einen Puffertank für gasförmigen Wasserstoff zu verwenden.

Die Speicherung der beladenen und entladenden LOHC-Trägerflüssigkeit kann bei Umgebungsbedingungen an Bord des Schiffes erfolgen. Die Speicher benötigen keine besonderen Sicherheitsmaßnahem über die üblichen Maßnahmen hinaus, wie sie für Brennstofftanks auf Schiffen erforderlich sind. Die Energiedichte der Trägerflüssigkeit liegt nur bei einem Viertel der Energiedichte von Dieselöl.

Der erzeugte Wasserstoff kann unterschiedlichen Verbrauchern zugeführt werden. Für die Antriebsmaschinen ist eine unmittelbare motorische Verbrennung 13 oder eine Gasturbine 12 sinnvoll. Für die Stromversorgung 14 des Schiffes können Generatoren verwendet werden, die ebenfalls von entsprechenden Antriebsmaschinen angetrieben werden. Ferner können mit hohem Wirkungsgrad betreibbare Brennstoffzellen 11 zur unmittelbaren Stromerzeugung verwendet werden. Zur Vermeidung schneller Energiewechsel an den Brennstoffzellen 11 kann es von Vorteil sein, die erzeugte elektrische Energie über Batterie-Pufferspeicher abrufbar zu machen.

### Bezugszeichen

- 1: LNG-Tank
- 2: Kompressor
- 3: Dampfreformer
- 4: Wassertank
- 5: zweiter Speicher
- 6: erster Speicher
- 7: Hydriereinrichtung
- 8: Dehydriereinrichtung
- 9: Pumpe
- 10: Pumpe
- 11: Brennstoffzelle
- 12: Gasturbine
- 13: Verbrennungsmotor
- 14: Bordnetz

## Patentansprüche

1. Verfahren zur Versorgung eines Wasserfahrzeuges mit elektrischer Energie zum Betrieb von fahrzeugeigenen Versorgungseinrichtungen und/oder des Fahrzeugantriebs, bei dem in einem Kreislauf LOHC-Trägermittel unter Wärmezufuhr mittels eines ersten Katalysators mit Wasserstoff beladen und das mit Wasserstoff beladene LOHC in einem ersten Speicher (6) zwischengespeichert wird, dann der Wasserstoff mittels eines zweiten Katalysators entladen und das entladene LOHC in einem zweiten Speicher (5) zwischengespeichert wird, bevor es erneut mit Wasserstoff beladen wird, wobei der aus dem LOHC entladene Wasserstoff einer Energieerzeugungseinheit zur Erzeugung elektrischer oder motorischer Energie zugeführt wird, **dadurch gekennzeichnet, dass** der dem LOHC Kreislauf zugeführte Wasserstoff mittels eines Dampfreformers (3) aus auf dem Wasserfahrzeug gelagertem LNG-Flüssiggas erzeugt wird.

2. Verfahren nach Anspruch 1, **dadurch gekennzeichnet, dass** aus dem LNG-Flüssiggas Boil-off-Gas entnommen und dem Dampfreformer (3) zugeführt wird.

3. Verfahren nach Anspruch 1, **dadurch gekennzeichnet, dass** ein Teil des im Boil-off-Gases des LNG-Flüssiggases enthaltenen Methans verbrannt und als Wärmeenergie dem Dampfreformer-Prozess zugeführt wird.

4. Verfahren nach Anspruch 1, **dadurch gekennzeichnet, dass** das dem Dampfreformer zugeführte Boil-off-Gas durch Einsatz von Abwärme aus Maschineneinrichtungen des Wasserfahrzeugs vorgeheizt wird.

5. Verfahren nach A1, **dadurch gekennzeichnet, dass** aus dem Dampfreformer ausgeleitetes Kohlenmonoxid oxidiert wird, bevor es an die Atmosphäre abgegeben wird.

6. Verfahren nach Anspruch 1, **dadurch gekennzeichnet, dass** das als Trägermaterial für den LOHC-Kreislauf Dibenzyltoluol verwendet wird.

7. Verfahren nach Anspruch 1, **dadurch gekennzeichnet, dass** die im zweiten Katalysator entstehende exotherme Wärme zur Vorheizung des Trägermaterials verwendet wird.

8. Verfahren nach Anspruch 1, **dadurch gekennzeichnet, dass** zur Unterstützung der Hydrierung im LOHC-Kreislauf Wärmeenergie aus Maschinenanlagen des Wasserfahrzeuges verwendet wird.
